# EUROPEAN PATENT APPLICATION

(11) **EP 4 704 307 A1**
(43) Date of publication of application: **04.03.2026**
(21) Application number: 25195303.0
(22) Date of filing: 12.08.2025
(51) Int. Cl.: H02J 50/80

(54) **WIRELESS HIGH SPEED IN-BAND COMMUNICATIONS**

(30) Priority: 29.08.2024 US 202418819832
(71) Applicant: Avago Technologies International Sales Pte. Limited, Singapore 768923 (SG)
(72) Inventor: Walley, John, Ladera Ranch, CA 92694 (US)
(74) Representative: Grünecker Patent- und Rechtsanwälte PartG mbB

(57) **Abstract**

A transceiver including a voltage regulator, a current regulator and a controller. In response to the voltage regulator receives a supply voltage from an active load, the voltage regulator measures quantified amounts of system current during successive time periods. The system current is consumed by the active load. The current regulator flows load current to ground. The controller processes the quantified amounts to ascertains an operating point for the system current. In response to the current regulator flows the load current to ground, the controller causes the current regulator flows the load current by an amount that clamps the system current to the operating point.

## Description

### BACKGROUND

Wireless power transfer systems can apply in-band communications for link management purposes in some instances. Link management in wireless communications can entail the control and maintenance of communication channels between wireless devices. In-band communications involves the use of the same communication channel for both data communications and link management functions.

### BRIEF DESCRIPTION OF DRAWINGS

The accompanying drawings, which are incorporated in and form a part of this specification, illustrate examples of the disclosure and, together with the description, explain principles of the examples.
FIG. 1 illustrates an example coil network, in accordance with one or more embodiments of the disclosure.
FIG. 2A illustrates an example transceiver, in accordance with one or more embodiments of the disclosure.
FIG. 2B illustrates an example transceiver, in accordance with one or more embodiments of the disclosure.
FIG. 3 illustrates an example controller, in accordance with one or more embodiments of the disclosure.
FIG. 4 illustrates a functional block diagram of bidirectional converter, in accordance with one or more embodiments of the disclosure.
FIG. 5 illustrates an exemplary schematic diagram for bidirectional converter, in accordance with one or more embodiments of the disclosure.
FIG. 6 is a block diagram illustrating an example current regulator, in accordance with one or more embodiments of the disclosure.
FIG. 7 is a flowchart that illustrates an example operating modes, in accordance with one or more embodiments of the disclosure.
FIG. 8B illustrates an exemplary COM mode, in accordance with one or more embodiments of the disclosure.

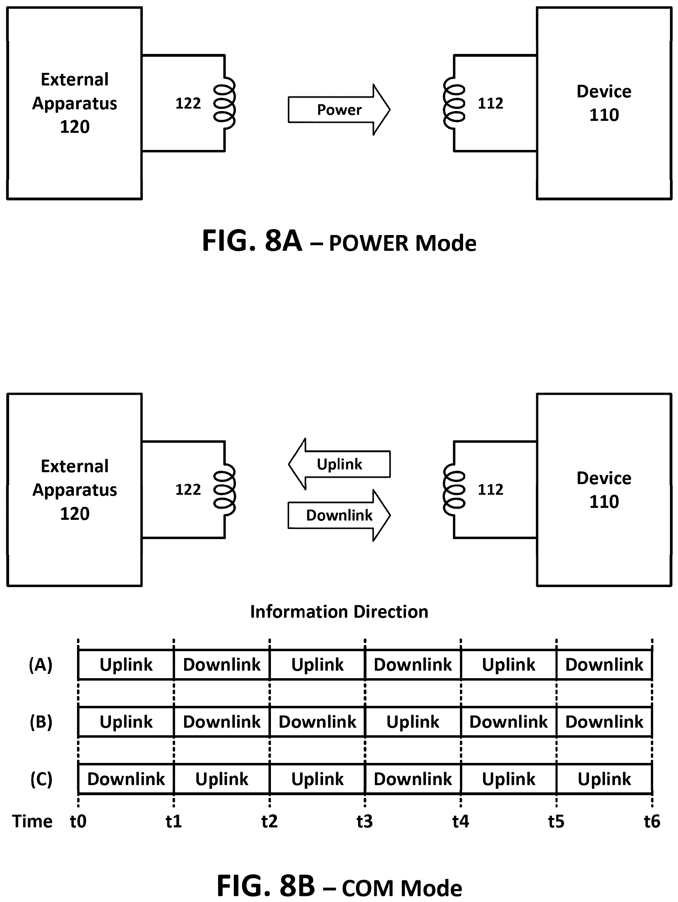

FIG. 8A illustrates an exemplary power reception mode, in accordance with one or more embodiments of the disclosure.

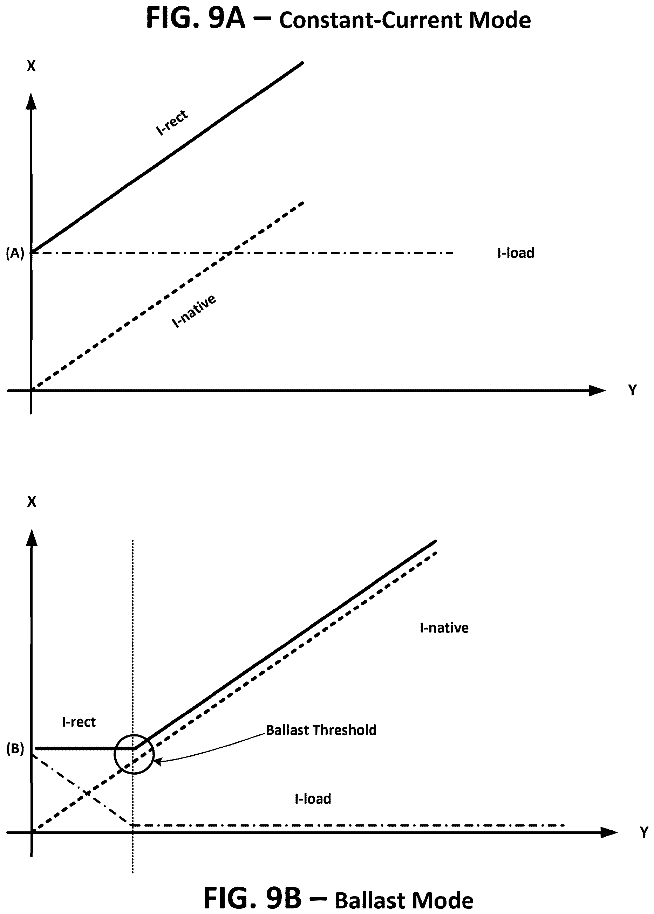

FIG. 9A illustrates an example constant-current mode, in accordance with one or more embodiments of the disclosure.
FIG. 9B illustrates an example ballast mode, in accordance with one or more embodiments of the disclosure.

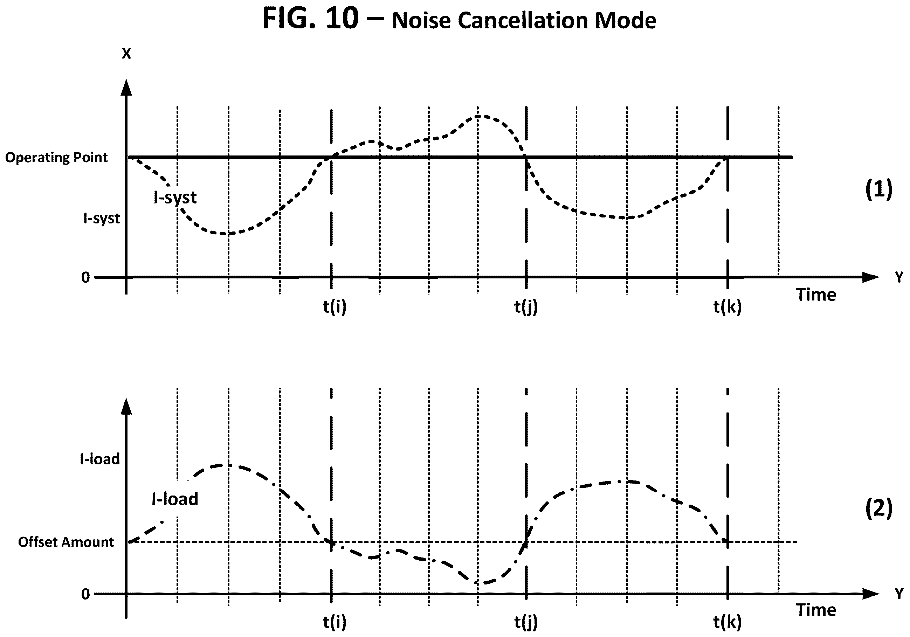

FIG. 10 illustrates an example noise cancellation mode, in accordance with one or more embodiments of the disclosure.

In the drawings, like reference symbols and numerals indicate the same or similar components. Like elements in the various figures are denoted by like reference symbols and numerals for consistency. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

The terminology used herein is for describing various examples only, and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.

Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

Wireless electric power transfer systems may employ in-band communications between a transceiver and an external source. In-band communications commonly refers to the communication of data within a designated frequency band. During in-band communications, high in-band data rates (>100kbps) are desirable. However, in some instances, achieving high in-band data rates can be challenging since characteristics of the transceiver may include a high Q-factor and a low self-resonant frequency. Ringing and oscillation of a communication signals could occur during in-band communications. According, there is a need in the art for an improved transceiver.

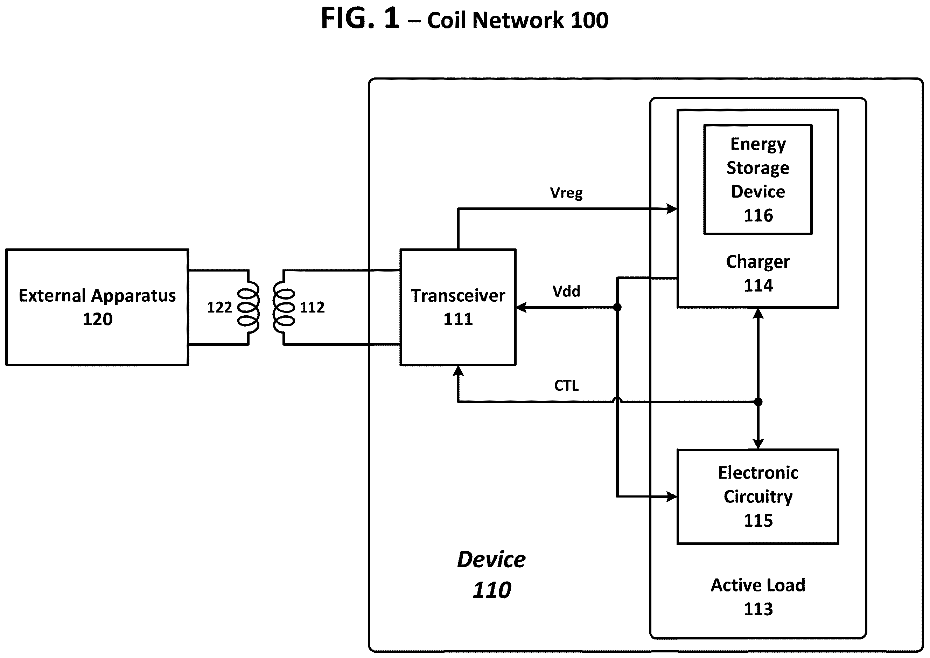

FIG. 1 illustrates an example coil network 100. Coil network 100 may include device 110 and external apparatus 120. Device 110 may wirelessly receive electric power from external apparatus 120. The electric power from external apparatus 120 may be a wireless electromagnetic wave. Device 110 may also wirelessly exchange information between external apparatus 120. Device 110 is removably connectable to external apparatus 120.

Device 110 may be configured as any type of electrically-powered device. For example, device 110 may be configured as a mobile communication device including, but not limited to, a mobile phone, a smart phone, cell phone, or tablet. Device 110 may be configured as a wearable device, a smartwatch, a fitness tracker or a personal digital assistant (PDA). In other examples, device 110 may be configured as a media device (e.g., media playing and/or recording device). Device 110 may include a portable music player, an audio device such as an audio recorder, an audio converter, an audio player, or a speaker (e.g., a Bluetooth-enabled speaker). In another instance, device 110 may include a video device such as a video display, a video recorder, a camera, or other video device. In other examples, device 110 may be configured as, a driver assistance module in a vehicle, an emergency transponder, a pager, a watch, a satellite television receiver, a stereo receiver, a computer system, music player, laptop or tablet computer, home appliance, or virtually any other device. Device 110 may be configured as a computer (e.g., a laptop computer). In another example, device 110 may be configured as a computing and/or entertainment device for a vehicle.

Device 110 may include transceiver 111, field coil 112 and active load 113. Those skilled in the art will appreciate there may be additional components in device 110. Active load 113 may include charger 114 and electronic circuitry 115.

Charger 114, which is downstream from transceiver 111, is circuitry that may perform DC-to-DC conversion on voltage Vreg. Voltage Vreg is a DC voltage. In response to performing the DC-to-DC conversion, charger 114 may transform voltage Vreg into an adjusted DC voltage. The adjusted DC voltage is a voltage having a voltage level that differs from the voltage level for voltage Vreg. Charger 114 may perform charging of energy storage device 115. Energy storage device 115 may include a battery and/or a battery pack. In response to charging energy storage device 115, charger 114 may store the adjusted DC voltage into energy storage device 115.

Charger 114 may also manage electrical energy that is stored in energy storage device 115. In response to managing the electrical energy that is stored in energy storage device 115, charger 114 may convert the electrical energy into a supply voltage Vdd. The supply voltage Vdd is a DC voltage. Charger 114 may output the supply voltage Vdd to electronic circuitry 115 and transceiver 111.

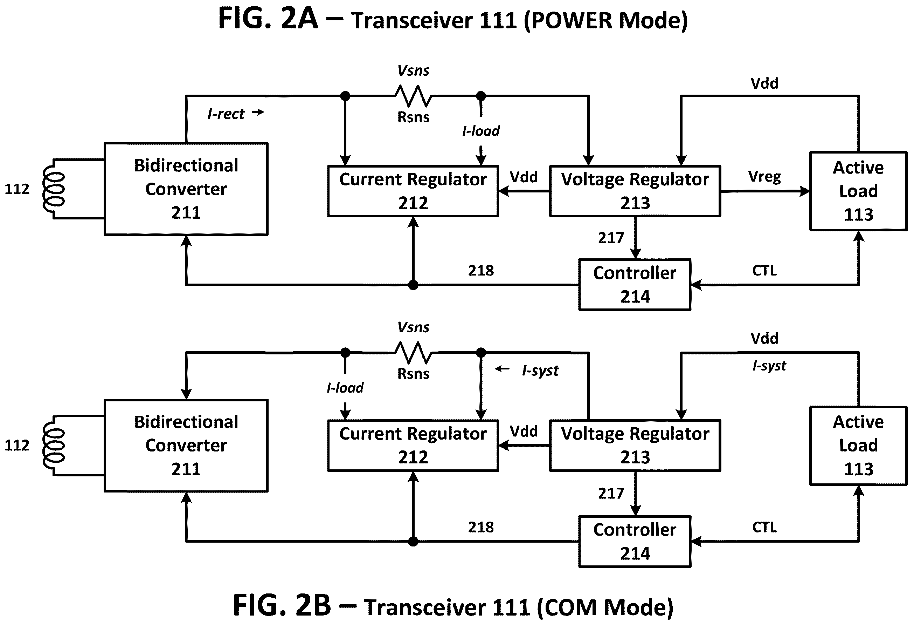

Referring to FIGS. 2A and 2B, functional block diagrams of transceiver 111 according to exemplary embodiments are shown. Components of transceiver 111 may include bidirectional converter 211, current regulator 212, voltage regulator 213 and controller 214. Those skilled in the art will appreciate there may be additional components in transceiver 111. An integrated circuit chip may include transceiver 111 in some examples.

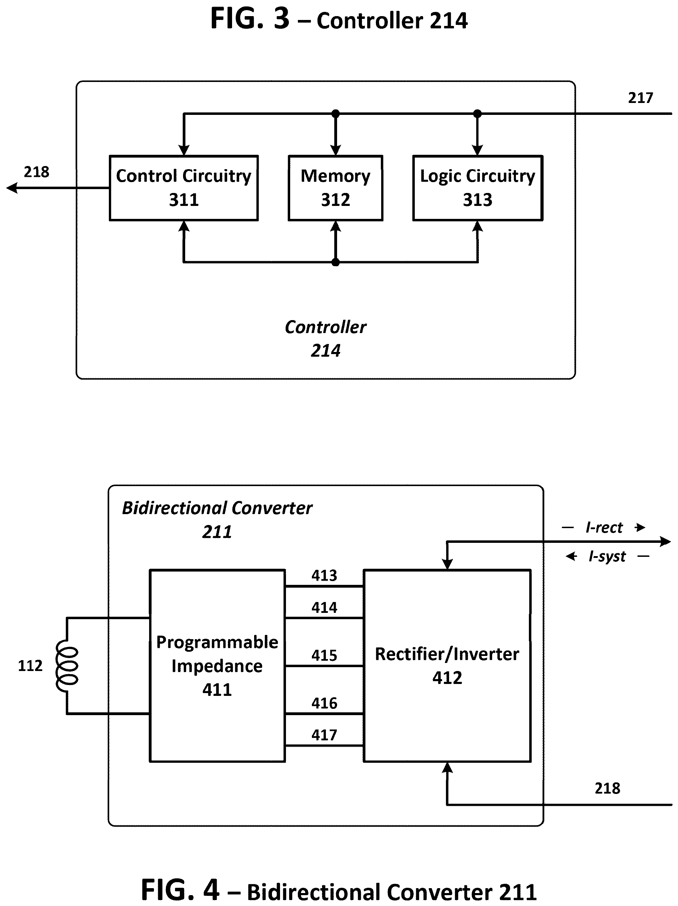

FIG. 3 illustrates an example controller 214. Components of controller 214 may include control circuitry 311, memory 312 and logic circuitry 313. Those skilled in the art will appreciate there may be additional components in controller 214. As will be explained in detail, controller 214 may control the functions of transceiver 111 and active load 113.

Control circuitry 311 is electronic hardware implemented as any suitable processing circuitry. The processing circuitry may include, but not limited to at least one of a microcontroller, a microprocessor, a single processor, and a multiprocessor. Control circuitry 311 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Control circuitry 311 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals.

Control circuitry 311 may control protective features for device 110. Protective features may include but not limited to overvoltage protection, overcurrent protection, short-circuit protection and temperature protection. In response to control circuitry 311 performs overvoltage protection, control circuitry 311 may detect momentary voltage increases such as voltage spikes. Control circuitry 311 may disconnect or reroute power in response to detecting a momentary voltage increase. A short circuit in device 110 may cause overheating of device 110. Control circuitry 311, in response to performing short-circuit protection as a protective feature, may detect the short circuit and cause a disconnection of power upon detecting the short circuit. Control circuitry 311 may monitor the operating temperature of device 110. In response to device 110 overheating, control circuitry 311 may regulate performance aspects of device 110 the reduce the operating temperature of device 110.

Memory 312 may be a non-transitory machine-readable storage medium. The non-transitory machine-readable storage medium may be a non-transitory processor readable or computer readable storage medium. The non-transitory machine-readable storage medium may comprise read-only memory ("ROM"), random access memory ("RAM"), other non-transitory computer-readable media and/or a combination thereof. Memory 312 may be any electronic, magnetic, optical, or other physical storage device. Memory 312 may store executable instructions for device 110. In some examples, the executable instructions may be in the form of software and/or firmware. The software for device 110 may include program code. The program code may include program instructions that are readable and executable by controller 214, also referred to as machine-readable instructions. Memory 312 may also store data, filters, rules and/or a combination thereof.

Logic circuitry 311 is implemented as electronic hardware that may include digital circuits, analog circuits or a combination of both digital and analog circuits. Analog circuits may include analog components that are suitable to process analog signals. Digital circuits may include switches and gates that are suitable to process digital signals.

FIG. 4 illustrates a functional block diagram of bidirectional converter 211 according to some embodiments. Components of bidirectional converter 211 may include programmable impedance 411 and rectifier/inverter 412. Programmable impedance 411 is electrically connected to field coil 122. Programmable impedance 411 may electronically tune field coil 122. Lines 413-417 may electrically connect rectifier/inverter 412 with programmable impedance 411.

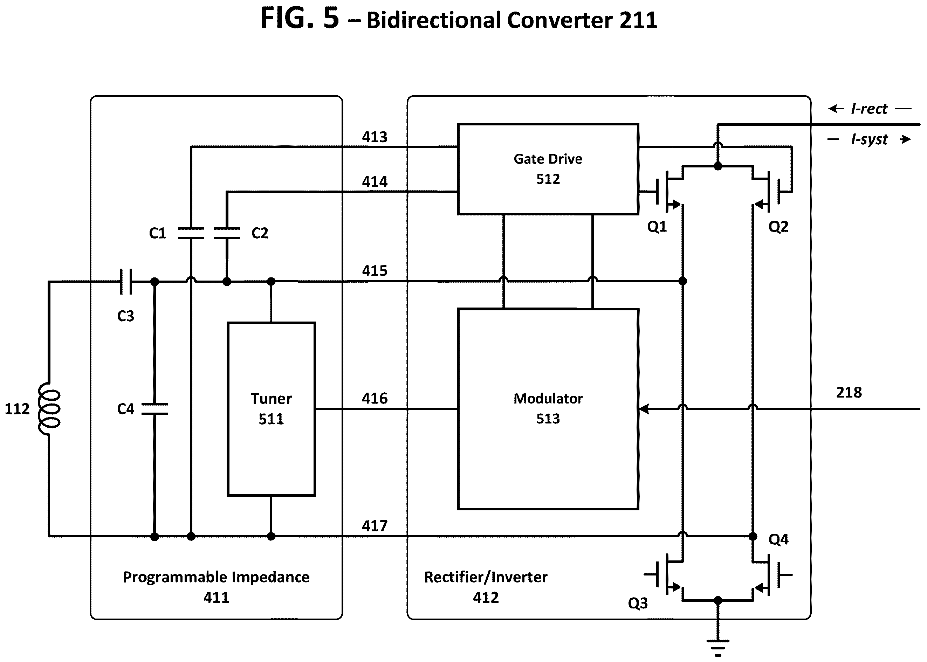

Referring to FIG. 5, an exemplary schematic diagram for bidirectional converter 211 is illustrated. Components of programmable impedance 411 may include capacitors C1-C4 and tuner 511. Components of rectifier/inverter 412 may include switches Q1-Q4, gate drive 512 and modulator 513. Line 413 may couple capacitor C1 to gate drive 512. Line 414 may couple capacitor C2 to gate drive 512. Line 415 may couple capacitor C2 to the source of switch Q1 and the drain of switch Q3. The source of switch Q3 and the source of switch Q4 are coupled to ground. Line 416 may couple tuner 511 to modulator 513. Line 417 may couple capacitor C4 to the source of switch Q2 and the drain of switch Q4. Switches Q1-Q4 may be implemented as N-type metal-oxide-semiconductor (NMOS) transistors. Alternatively, any of the switches Q1-Q4 may be implemented as a Field Effect Transistor (FET), a bipolar transistor, a P-type metal-oxide-semiconductor (PMOS) transistor, or any other switching device. Those skilled in the art will appreciate there may be additional components in bidirectional converter 211.

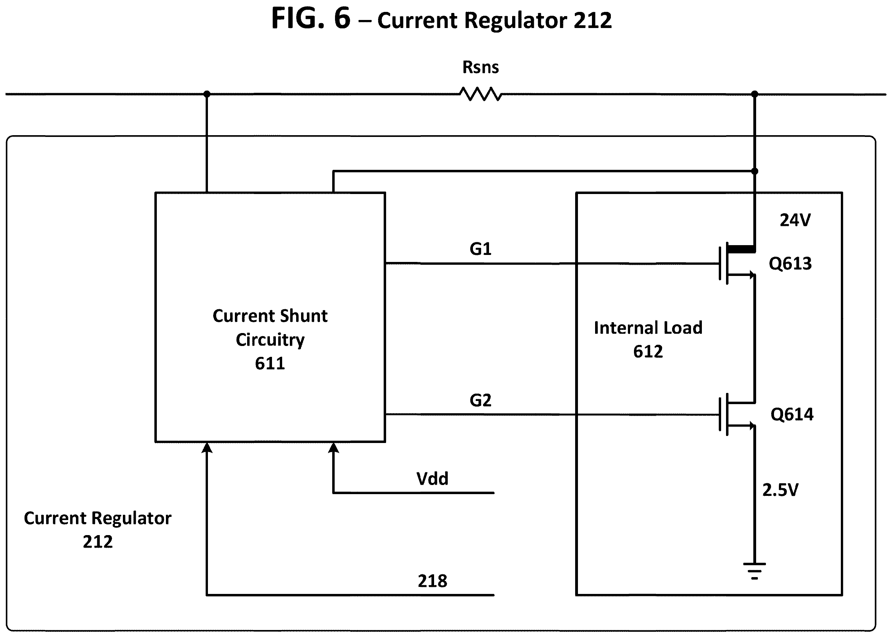

FIG. 6 is a block diagram illustrating an example current regulator 212. Current regulator 212 may include current shunt circuitry 611 and internal load 612. Internal load 612 may include a first transistor Q613 and a second transistor Q614. The first transistor Q613 and the second transistor Q614 may be implemented as N-type metal-oxide-semiconductor (NMOS) transistors. The first transistor Q613 may be an N-type laterallydiffused metal-oxide semiconductor (LDNMOS) transistor. Alternatively, any of the first and second transistors Q613, Q614 may be implemented as a Field Effect Transistor (FET), a bipolar transistor, a P-type metal-oxide-semiconductor (PMOS) transistor, or any other switching device.

Within internal load 612, the first transistor Q613 may be a cascode. The first transistor Q613 may be a high voltage transistor and the second transistor Q614 may be a low voltage transistor. In particular, the first transistor Q613 may be a protection transistor that provides voltage protection and output impedance boost for the second transistor Q614. For example, the first transistor Q613 may be a 24V LDNMOS transistor. The second transistor Q614 may be a 2.4V metal-oxide semiconductor (MOS) transistor.

The drain of the first transistor Q613 is electrically connected to the second terminal of resistor Rsns, the source of the first transistor Q613 is electrically connected to the drain of the second transistor Q614, and the drain of the second transistor Q613 is electrically connected to ground.

Current shunt circuitry 611 is electrically connected to the first terminal of resistor Rsns. On line 218, current shunt circuitry 611 may receive control signals from controller 214. Current shunt circuitry 611 receive the supply voltage Vdd from voltage regulator 213. Lines G1 and G2 connect current shunt circuitry 611 to internal load 612. In particular, line G1 is connected to the gate of the first transistor Q613. Line G2 is connected to the gate of the second transistor Q614. Those skilled in the art will appreciate that current regulator 212 may function as a current sink.

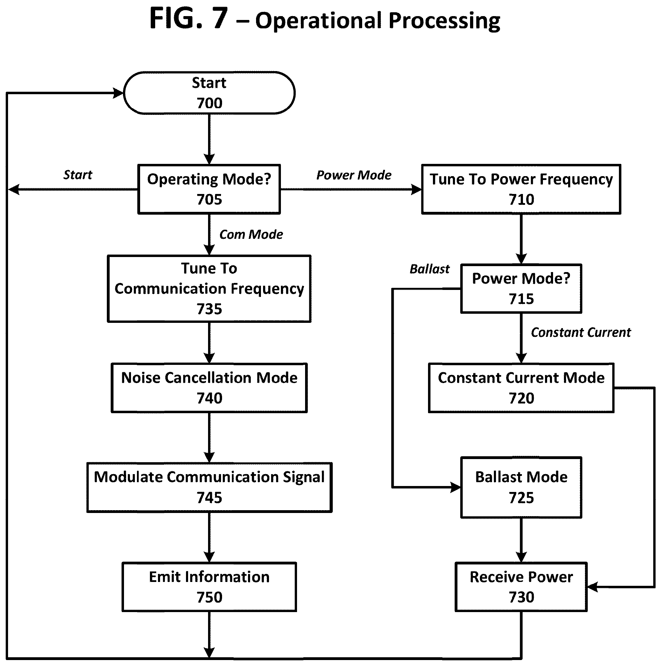

FIG. 7 is a flowchart illustrating example operational processing by controller 214. Controller 214 may perform a sequence of activities illustrated in the example operational processing of FIG. 7, as will be explained in detail. By way of illustration, memory 312 may store machine-readable instructions that, in response to executed by controller 214, causes controller 214 to perform a sequence of activities illustrated in the example operational processing. In some examples, logic circuitry 313 may cause controller 214 to perform the sequence of activities illustrated in the example operational processing. In other examples, a combination of machine-readable instructions and logic circuitry 313 may cause controller 214 to perform the sequence of activities illustrated in the example operational processing. Sequencing of the operational processing may commence in block 700 of FIG. 7.

In block 700, controller 214 may place transceiver 111 in a standard mode. The standard mode is an operating mode of device 110 where transceiver 111 is electric powered on but is neither receiving electric power nor wirelessly transmitting information. While in the standard mode, transceiver 111 neither receives electric power from external apparatus 120 nor transmits information to external apparatus 120. Controller 214 may advance the processing in FIG. 7 from block 700 to block 705.

In block 705, controller 214 may select one of many operating modes for transceiver 111. Operating modes may include a POWER mode to wirelessly receive electric power and a COM mode to wirelessly exchange information. In the absence of controller 214 selecting either the POWER mode or the COM mode, controller 214 may return the processing in FIG. 7 from block 705 to block 700 (Start) upon expiration of a predetermined waiting period. Controller 214 may advance the processing in FIG. 7 from block 705 to block 735 in response to controller 214 selecting the COM mode as the operating mode. Alternatively, controller 214 may advance the processing in FIG. 7 from block 705 to block 710 in response to controller 214 selecting the POWER mode.

In block 710, controller 214 may send a tuning instruction along line 218 to bidirectional converter 211. FIG. 8A illustrates an exemplary POWER mode by which field coil 112 of transceiver 111 may receive electric power in a wireless electric power signal from external apparatus 120. Referring to FIGS. 9A and 9B, transceiver 111 may alternatively operate in a plurality of power reception modes in response to receiving electric power from external apparatus 120. In some examples, the power reception mode may be a constant-current mode as in FIG. 9A. By way of illustration in FIG. 9B, the power reception mode may be a ballast mode in other examples. Each power reception mode may allow for a guaranteed minimum current in bidirectional converter 211 in the event that active load 113 draws less than an amount of current required for robust operation of bidirectional converter 211.

Controller 214 may send a tuning instruction along line 218 to modulator 513. The tuning instruction may command bidirectional converter 211 to electronically tune field coil 112 to the center frequency of the electric power signal. In response to the tuning instruction, modulator 513 may send a signal on line 416. The signal on line 416 may cause tuner 511 to electronically tune field coil 112 to the center frequency of the electric power. Field coil 112 may wirelessly receive the electric power from external apparatus 210. Modulator 513 may also cause gate drive 512 to control switches Q1-Q2. Controller 214 may advance the processing in FIG. 7 from block 710 to block 715 in response to bidirectional converter 211 electronically tuning field coil 112 to the center frequency of the electric power signal.

In block 715, controller 214 may select between a ballast mode and a constant-current mode from a plurality of the POWER modes. FIG. 8A is example of transceiver 111 configured to condition electric power in response to wirelessly receiving electric power from external apparatus 120. Electric power from external apparatus 120 may be AC (alternating current) electric power. Transceiver 111 may, in response to conditioning electric power, rectify the electric power. For example, bidirectional converter 211 may rectify the electric power signal to produce rectified current (I-rect) during any of the POWER modes.

Rectified current (I-rect) is depicted in FIGS. 9A and 9B as a solid line. In the examples of FIGS. 9A and 9B, load current (I-load) is depicted as a dot-dashed line. Native current (I-native), depicted as a dashed line in FIGS. 9A and 9B is a depiction of rectified current (I-rect) absent a constant current in FIG. 9A and absent ballasting in FIG. 9B. While in the constant-current mode and the ballast mode, current regulator 212 may function as a current sink that brings about a flow of load current (I-load). Those skilled in the art will appreciate that rectified current (I-rect) in FIGS. 9A and 9B is the sum total of native current (I-native) and load current (I-load). In various embodiments, the resistance of resistor Rsns being 20 mΩ or less may ensure that a significant amount of rectified current (I-rect) flows from bidirectional converter 211 to voltage regulator 213 without degrading the performance characteristics of transceiver 111. Controller 214 may advance the processing in FIG. 7 from block 715 to block 725 in response to controller 214 selects the ballast mode as the POWER mode. Otherwise, controller 214 may advance the processing in FIG. 7 from block 715 to block 720 in response to controller 214 selects the constant-current mode as the POWER mode.

In block 720, controller 214 may send constant-current signaling to current regulator 212 along line 218. The constant-current signaling may cause current regulator 212 to operate in the constant-current mode. FIG. 9A illustrates exemplary currents levels during the constant-current mode. While in the constant-current mode, current regulator 212 may modify the current level of rectified current (I-rect) as in the example of FIG. 9A. During the constant-current mode, current regulator 212 may stabilize rectified current (I-rect) by safeguarding against rectified current (I-rect) falling below the constant-current threshold, regardless of an amount of rectified current (I-rect). For example, in FIG. 9A, current regulator 212 may cause an amount of load current (I-load) to flow into current regulator 212 so that rectified current (I-rect) is linear entirely with native current (I-native) while being greater than native current (I-native) by the amount of load current (I-load). A load current amount (A) is an adjustable current level. Information in the constant-current signaling may instruct current regulator 212 to fix load current (I-load) along the x-axis to the load current amount (A) illustrated in FIG. 9A. Controller 214 may advance the processing in FIG. 7 from block 720 to block 730 in response to controller 214 causes current regulator 212 to function in the constant-current mode.

In block 725, controller 214 may allow for transceiver 111 to wirelessly receive electric power from external apparatus 120 in the ballast mode. As another of the POWER modes, FIG. 9B illustrates exemplary currents levels during the ballast mode. Controller 214 may calibrate current regulator 212 to operate in the ballast mode. Controller 214 may adjust the level of a ballast threshold along the x-axis to the current level (B) illustrated in FIG. 9B.

During the ballast mode, current regulator 212 may stabilize rectified current (I-rect) by safeguarding against rectified current (I-rect) falling below the ballast threshold, regardless of any changes in native current (I-native). For example, controller 214 may cause current regulator 212 to measure current flowing through resistor Rsns during the ballast mode. In response to native current (I-native) is below the ballast threshold during the ballast mode, current regulator 212 may cause load current (I-load) to flow into current regulator 212 by an amount that clamps rectified current (I-rect) to the ballast threshold, as illustrated in the example of FIG. 9B. Current regulator 212, in response to clamping rectified current (I-rect) to the ballast threshold, may decrease the flow of load current (I-load) concurrently with an increase in native current (I-native) and increase the flow of load current (I-load) concurrently with a decrease in native current (I-native). In response to native current (I-native) is equal to or above the ballast threshold, current regulator 212 may cause rectified current (I-rect) to become linear with native current (I-native) by inhibiting a flow of load current (I-load) into current regulator 212. Controller 214 may advance the processing in FIG. 7 from block 725 to block 730 in response to controller 214 causing current regulator 212 to function in the ballast mode.

In block 730, controller 214 may cause bidirectional converter 211 to wirelessly receive the electric power. FIG. 8A illustrates an exemplary power reception mode by which field coil 112 of bidirectional converter 211 may receive electric power in a wireless electric power signal from external apparatus 120. In response to receiving the electric power signal, bidirectional converter 211 may rectify the electric power signal so as to convert the electric power signal into electric power. Voltage regulator 213 may convert rectified current (I-rect) into voltage Vreg and output voltage Vreg to charger 114. Controller 214 may advance the processing in FIG. 7 from block 730 to block 700 in response to controller 214 causing bidirectional converter 211 to wirelessly receive the electric power.

Controller 214 may advance the processing in FIG. 7 from block 705 to block 735 in response to controller 214 selecting the COM mode as the operating mode. Wireless power transfer systems may use in-band communications through a coil network for control and data applications. Coil network 100 is an example a coil network. A need in the art may exist for higher data rates during exchanges of information between device 110 and external apparatus 120.

In block 735, controller 214 may send a tuning instruction along line 218 to modulator 513. The tuning instruction may command bidirectional converter 211 to electronically tune field coil 112 to the center frequency of the communication signal. For example, modulator 513 may send a signal on line 416 in response to the tuning instruction. The signal on line 416 may cause tuner 511 to electronically tune field coil 112 to the center frequency of the communication signal. FIG. 8B illustrates an exemplary COM mode by which field coil 112 of device 110 may exchange information in a wireless communication signal with external apparatus 120. The communication signal may be a wireless electromagnetic wave. The tuning instruction may command modulator 513 to electronically tune field coil 112 to the center frequency of the upstream power. In such instances, the center frequency of the upstream power may become the center frequency of the communication signal.

Transceiver 111 is configured to wirelessly exchange information to and from external apparatus 120. Communication requirements for the exchange of information between device 110 and external apparatus 120 may include, but are not limited to, the baud rate and the bandwidth of the communication channel. Controller 214 may select the center frequency of the communication signal based on the communication requirements. For example, bidirectional converter 112 may wirelessly transmit upstream power to external apparatus 610. In some examples, the center frequency for the upstream power may differ from the center frequency for the electric power received in block 730. For example, the center frequency for the upstream power may be higher than the center frequency for electric power. In other examples, in response to device 110 receiving software updates or other voluminous data files, controller 214 may select a center frequency of the communication signal for that differs from a center frequency of the communication signal for tasks other than receiving software updates or other voluminous data files. Controller 214 may advance the processing in FIG. 7 from block 735 to block 740 in response to bidirectional converter 211 electronically tuning field coil 112 to the center frequency of the communication signal.

In block 740, transceiver 111 may enter into noise cancellation mode. FIG. 10 illustrates an example noise cancellation mode. While in the noise cancellation mode, transceiver 111 may condition system current (I-syst) for use in bidirectional converter 211. To condition system current (I-syst) for use in bidirectional converter 211, current regulator 212 may adjust the flow of the load current (I-load) by an amount that reduces or eliminates noise on the system current (I-syst). In such instances, the amount of load current (I-load) that reduces or eliminates noise on the system current (I-syst) may be inversely proportional to a variance in system current (I-syst). This approach may allow for current regulator 212 to increase the flow of load current (I-load) concurrently with a decrease in system current (I-syst) and reduce the flow of load current (I-load) concurrently with an increase in system current (I-syst).

An operating point for system current (I-syst) is an aspirational value representing system current (I-syst) without noise. Graph (1) in FIG. 10 depicts the operating point as a solid line. In response to system current (I-syst) being below an operating point during the noise cancellation mode, current regulator 212 may increase the flow of load current (I-load) into current regulator 212 by an amount that clamps system current (I-syst) to the operating point. In response to system current (I-syst) being above the operating point during the noise cancellation mode, current regulator 212 may reduce the flow of load current (I-load) into current regulator 212 by an amount that clamps system current (I-syst) to the operating point.

In block 740, controller 214 may configure voltage regulator 213 to perform measurements on system current (I-syst) in response to voltage regulator 213 receives the supply voltage Vdd in the example of FIG. 2B. System current (I-syst) is current corresponding to the supply voltage Vdd. In particular, system current (I-syst) is an amount of current consumed by active load 113. Graph (1) in FIG. 10 depicts an example system current (I-syst) at various points in time as a dot-dashed line. Voltage regulator 213 may perform measurements on system current (I-syst) to ascertain quantified amounts of system current (I-syst) at various points in time. A measured value of system current (I-syst) is the quantified amount.

During successive time periods, controller 214 may receive the measurements from voltage regulator 213. Controller 214 may process the measurements to ascertain the operating point. In response to ascertaining the operating point, voltage regulator 213 may perform any procedure that may include averaging the measurements during a predetermined number of the successive time periods, low-pass filtering system current (I-syst) and/or another procedure that may ascertain the operating point.

Current regulator 212, in the noise cancellation mode, may function as a current sink that brings about a flow of load current (I-load). For example, controller 214 may cause current regulator 212 to measure current flowing through resistor Rsns during the noise cancellation mode. In the example of FIG. 6, the drain of the first transistor Q613 is electrically connected to the second terminal of resistor Rsns, the source of the first transistor Q613 is electrically connected to the drain of the second transistor Q614, and the drain of the second transistor Q613 is electrically connected to ground. In various embodiments, the resistance of resistor Rsns being 20 mΩ or less ensures that a significant amount of system current (I-syst) may flow from voltage regulator 213 to bidirectional converter 211 without degrading the performance characteristics of transceiver 111.

Current regulator 212 may cause a requisite amount of load current (I-load) to flow into current regulator 212, as illustrated in the example of FIG. 2B. The requisite amount is an amount of load current (I-load) necessary to clamp system current (I-syst) to the operating point. Controller 214 may calculate the requisite amount as sum of the offset amount and a variance amount. The variance amount is the difference between the operating point and the system current (I-syst). In response to calculating the difference, the minuend is the operating point and subtrahend is the system current (I-syst).

Being that current regulator 212 may function as a current sink as illustrated in the example of FIG. 6, those skilled in the art will appreciate that load current (I-load) in the noise cancellation mode may oscillate about an offset amount greater than zero, as illustrated in the example of Graph (2) in FIG. 10. The offset amount is an amount of load current (I-load) that, in response to flowing into current regulator 212, results in system current (I-syst) being clamped to the operating point. For example, FIG. 10 illustrates points in time t(i), t(j) and t(k) in response to the amount of load current (I-load) clamping system current (I-syst) to the operating point. Controller 214 may calculate the offset amount in response to bidirectional converter 211 may emit modulated information. During times other than when bidirectional converter 211 emits modulated information, controller 214 may set the offset amount to zero.

While in the noise cancellation mode in blocks 740, 745 and 750, controller 214 may configure current regulator 212 to clamp system current (I-syst) to the operating point. As such, clamping system current (I-syst) to the operating point may stabilize system current (I-syst) by safeguarding against excessive noise in system current (I-syst). Controller 214 may advance the processing in FIG. 7 from block 740 to block 745 in response to controller 214 configuring voltage regulator 213 to convert the supply voltage Vdd into system current (I-syst).

In block 745, controller 214 may send a modulation instruction to rectifier/inverter 412 along line 218. In response to receiving the modulation instruction, rectifier/inverter 412 may convert system current (I-syst) into the communication signal. The communication signal may be a continuous sinusoidal waveform that oscillates at the center frequency of the communication signal.

Device 110 may establish an uplink for outbound transmission of the uplink information by bidirectional converter 211 to external apparatus 120. Controller 214 may produce encoded information by applying an encoding scheme to the uplink information. The encoding scheme may transform the uplink information from one format into another format. As an illustration, controller 214 may apply the encoding scheme to the uplink information by mapping a single bit of the uplink information onto two or more bits of the encoded information. Controller 214 may vary the number of bits per symbol in the encoding scheme depending on the amount of uplink information to be transferred by device 110 to external apparatus 120. In cases where device 110 may transfer a data stream or other voluminous data file to external apparatus 120, controller 214 may select a lower number of bits for the encoding scheme than in cases where device 110 may transfer a message or packet to external apparatus 120.

Controller 214 may transfer the encoded information along line 218 to modulator 513. Modulator 513 may modulate the encoded information onto the communication signal to produce a modulated carrier wave. The modulated carrier wave may include a series of the symbols. In some examples, a single symbol may represent one or more bits of the encoded information. In other examples, a single symbol may represent a fraction of a bit of the encoded information. Each bit of the encoded information may occupy a specific time slot in the modulated carrier wave. A bit boundary may occur in the modulated carrier wave at a point in time or position in the modulated carrier wave where one bit of the encoded information ends and the next succeeding bit of the encoded information begins. A symbol may be a phase state of the modulated carrier wave, a waveform of the modulated carrier wave and/or a signal level the modulated carrier wave. A baud rate is the number of symbols per second that bidirectional converter 211 may transmit.

A center frequency of the modulated carrier wave is the center frequency of the communication signal. The center frequency of the modulated carrier wave may be higher than the baud rate for the encoded information. The modulated carrier wave may be a continuous sinusoidal waveform that oscillates at the center frequency of the modulated carrier wave. By oscillating at the center frequency of the modulated carrier wave, the modulated carrier wave may include timing information required by external apparatus 120 for synchronization with device 110 during recovery by external apparatus 120 of the uplink information from the modulated carrier wave.

In cases where modulator 513 modulates the communication signal with the series of the symbols to produce the modulated carrier wave, modulator 513 may align the bit boundary with a carrier edge in the modulated carrier wave. In some examples, the carrier edge may occur where the modulated carrier wave transitions from a rising edge of the modulated carrier wave to a falling edge of the modulated carrier wave. In other examples, the carrier edge may occur where the modulated carrier wave transitions from a falling edge of the modulated carrier wave to a rising edge of the modulated carrier wave. Controller 214 may advance the processing in FIG. 7 from block 745 to block 750 in response to controller 214 sending, to modulator 513, the modulation instruction and the encoded information.

In block 750, controller 214 may cause bidirectional converter 211 to emit the modulated carrier wave from field coil 112 to external apparatus 120 while in the noise cancellation mode. The modulated carrier wave may include a succession of the symbols. FIG. 8B illustrates an exemplary COM mode by which field coil 112 of device 110 may exchange information in a wireless communication signals with external apparatus 120. Time division duplexing is an approach by which device 110 may establish an uplink for outbound transmission of the uplink information by bidirectional converter 211 to external apparatus 120 and a downlink for inbound reception of downlink information by bidirectional converter 211 from external apparatus 120. Device 110 may employ time division duplexing in response to exchanging information with external apparatus 120.

The uplink and the downlink may both exist within a single communication channel but at differing points in time. For example, controller 214 may send, along line 218 to bidirectional converter 211, an uplink instruction that commands bidirectional converter 211 to transmit the uplink information to external apparatus 120 after electronically tuning field coil 112 to the center frequency. Alternatively, controller 214 may send, along line 218 to bidirectional converter 211, a downlink instruction that commands bidirectional converter 211 to receive downlink information from external apparatus 120. Controller 214 may alternately send the uplink instruction and the downlink instruction to bidirectional converter 211 at intervening points in time. By way of illustration in FIG. 8B, a chronological arrangement of instructions (A), an alternate chronological arrangement of instructions (B) and another chronological arrangement of instructions (C) are represented. Controller 214 may return the processing in FIG. 7 from block 750 to block 700 in response to controller 214 causes bidirectional converter 211 to wirelessly exchange information while in the noise cancellation mode.

Through the examples described herein, components of device 110 may permit higher data rates during exchanges of information between device 110 and external apparatus 120.

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only in response to preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") in response to preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.
The invention further comprises the following embodiments forming part of the description:
1. A transceiver comprising:
   a voltage regulator configured to:
      measure, during successive time periods in response to receiving a supply voltage from an active load, quantified amounts of system current consumed by the active load;
   a current regulator configured to:
      flow load current to ground; and
   a controller configured to:
      ascertain, in response to processing the quantified amounts, an operating point for the system current, and
      cause, in response to the current regulator flowing the load current to ground, the current regulator to flow the load current by an amount that clamps the system current to the operating point.
2. The transceiver according to embodiment 1, wherein the controller is configured to:
   cause, in response to the current regulator flowing the load current to ground, the current regulator to adjust flow of the load current by an amount that is inversely proportional to a variance in the system current.
3. The transceiver according to embodiment 1, wherein the operating point is an aspirational value representing system current without noise.
4. The transceiver according to embodiment 1, wherein the controller is configured to:
   average, in response to ascertaining the operating point, the quantified amounts.
5. The transceiver according to embodiment 1, wherein the controller is configured to:
   low-pass filter the system current in response to ascertaining the operating point.
6. The transceiver according to embodiment 1, wherein the controller is configured to:
   calculate, as a sum of an offset amount and a variance amount, the amount that clamps the system current to the operating point.
7. The transceiver according to embodiment 5, wherein the variance amount is a difference between the operating point and the system current.
8. The transceiver according to embodiment 5, wherein the offset amount is an amount of load current that results in the system current being clamped to the operating point.
9. The transceiver according to embodiment 1, further comprising:
   a bidirectional converter configured to:
   convert, in response to receiving a modulation instruction from the controller, the system current into a communication signal.
10. The transceiver according to embodiment 7, wherein the bidirectional converter is configured to:
   convert, in response to receiving the modulation instruction from the controller, the system current into communication signal.
11. The transceiver according to embodiment 8, wherein the bidirectional converter is configured to:
   modulate, to produce a modulated carrier wave, encoded information onto the communication signal.
12. The transceiver according to embodiment 9, wherein the controller is configured to:
   produce, by applying an encoding scheme to uplink information, the encoded information.
13. The transceiver according to embodiment 10, wherein the controller is configured to:
   vary, depending on an amount of the uplink information, a number of bits per symbol in the encoding scheme.
14. The transceiver according to embodiment 9, wherein the bidirectional converter is configured to:
   align, in response to modulating the encoded information onto the communication signal, a bit boundary in the modulated carrier wave with a carrier edge in the modulated carrier wave.
15. The transceiver according to embodiment 11, wherein the bit boundary is where one bit of the encoded information ends and a next succeeding bit of the encoded information begins.
16. The transceiver according to embodiment 11, wherein the carrier edge is where the modulated carrier wave transitions from a rising edge of the modulated carrier wave to a falling edge of the modulated carrier wave.
17. The transceiver according to embodiment 11, wherein the carrier edge is where the modulated carrier wave transitions from a falling edge of the modulated carrier wave to a rising edge of the modulated carrier wave.
18. The transceiver according to embodiment 9, wherein the bidirectional converter comprises:
   a field coil configured to emit the modulated carrier wave.
19. The transceiver according to embodiment 14, wherein the controller is configured to:
   send, to the bidirectional converter, a tuning instruction that commands the bidirectional converter to electronically tune the field coil to a center frequency of the communication signal.
20. A device configured to:
   flow, to ground, a load current by an amount that clamps a system current to an operating point;
   generate a communication signal from the system current;
   generate a modulated carrier wave in response to modulating the communication signal with uplink information; and
   emit, in response to tuning a field coil to a center frequency of the communication signal, the modulated carrier wave from the field coil.

## Claims

1. A transceiver comprising:
a voltage regulator configured to:
measure, during successive time periods in response to receiving a supply voltage from an active load, quantified amounts of system current consumed by the active load;
a current regulator configured to:
flow load current to ground; and
a controller configured to:
ascertain, in response to processing the quantified amounts, an operating point for the system current, and
cause, in response to the current regulator flowing the load current to ground, the current regulator to flow the load current by an amount that clamps the system current to the operating point.

2. The transceiver according to claim 1, wherein the controller is configured to:
cause, in response to the current regulator flowing the load current to ground, the current regulator to adjust flow of the load current by an amount that is inversely proportional to a variance in the system current.

3. The transceiver according to claim 1 or claim 2, wherein the operating point is an aspirational value representing system current without noise.

4. The transceiver according to one of claims 1 to 3, wherein the controller is configured to:
average, in response to ascertaining the operating point, the quantified amounts;
and/or
low-pass filter the system current in response to ascertaining the operating point.

5. The transceiver according to one of claims 1 to 4, wherein the controller is configured to:
calculate, as a sum of an offset amount and a variance amount, the amount that clamps the system current to the operating point.

6. The transceiver according to claim 5, wherein the variance amount is a difference between the operating point and the system current,
and/or
wherein the offset amount is an amount of load current that results in the system current being clamped to the operating point.

7. The transceiver according to one of claims 1 to 6, further comprising:
a bidirectional converter configured to:
convert, in response to receiving a modulation instruction from the controller, the system current into a communication signal.

8. The transceiver according to claim 7, wherein the bidirectional converter is configured to:
convert, in response to receiving the modulation instruction from the controller, the system current into communication signal.

9. The transceiver according to claim 8, wherein the bidirectional converter is configured to:
modulate, to produce a modulated carrier wave, encoded information onto the communication signal.

10. The transceiver according to claim 9, wherein the controller is configured to:
produce, by applying an encoding scheme to uplink information, the encoded information, in particular wherein the controller is configured to:
vary, depending on an amount of the uplink information, a number of bits per symbol in the encoding scheme.

11. The transceiver according to one of claims 9 to 10, wherein the bidirectional converter is configured to:
align, in response to modulating the encoded information onto the communication signal, a bit boundary in the modulated carrier wave with a carrier edge in the modulated carrier wave.

12. The transceiver according to claim 11, wherein the bit boundary is where one bit of the encoded information ends and a next succeeding bit of the encoded information begins
and/or
wherein the carrier edge is where the modulated carrier wave transitions from a rising edge of the modulated carrier wave to a falling edge of the modulated carrier wave.

13. The transceiver according to claim 11 or claim 12, wherein the carrier edge is where the modulated carrier wave transitions from a falling edge of the modulated carrier wave to a rising edge of the modulated carrier wave.

14. The transceiver according to one of claims 9 to claim 13, wherein the bidirectional converter comprises:
a field coil configured to emit the modulated carrier wave, in particular wherein the controller is configured to:
send, to the bidirectional converter, a tuning instruction that commands the bidirectional converter to electronically tune the field coil to a center frequency of the communication signal.

15. A device configured to:
flow, to ground, a load current by an amount that clamps a system current to an operating point;
generate a communication signal from the system current;
generate a modulated carrier wave in response to modulating the communication signal with uplink information; and
emit, in response to tuning a field coil to a center frequency of the communication signal, the modulated carrier wave from the field coil.
